# EUROPEAN PATENT APPLICATION

(11) **EP 3 855 552 A1**
(43) Date of publication of application: **28.07.2021**
(21) Application number: 21305076.8
(22) Date of filing: 22.01.2021
(51) Int. Cl.: H01M 10/42, H01M 10/48, H01M 10/613, H01M 10/615, H01M 10/625, H01M 10/63, H01M 10/66

(54) **CONDITIONING SYSTEM FOR ELECTRICAL EQUIPMENT OF A VEHICLE**

(30) Priority: 22.01.2020 IT 202000001198
(71) Applicant: IVECO FRANCE S.A.S., 69200 Vénissieux (FR)
(72) Inventor: CODRON, Stephane, 69008 LYON (FR)
(74) Representative: Faraldi, Marco

(57) **Abstract**

A conditioning system (2) for electrical equipment (E) of a vehicle (1), comprising a heat exchanger (3) inside of which a conditioning fluid of a conditioning circuit (4), configured to exchange heat with the electrical equipment (E), circulates, and heating means (10) configured to directly heat at least one of the walls (7', 7") of the heat exchanger (3). The system has been developed in particular for the circuit for maintaining the temperature of the high-voltage battery and its heating when the outside temperature is low.

## Description

### CROSS-REFERENCE TO RELATED APPLICATIONS

This patent application claims priority from Italian patent application no. 102020000001198 filed on January 22, 2020.

### TECHNICAL FIELD

This invention concerns a conditioning system for electrical equipment of a vehicle, in particular a conditioning system for an electrical equipment of a vehicle for public passenger transport.

### PRIOR ART

Vehicles have tended to be increasingly electrified through the use of batteries, for example lithium batteries. This trend has also occurred in the field of vehicles for public passenger transport.

During their use, electric batteries tend to change temperature, heating up when they are used to store or supply electricity.

In addition, these temperature changes are also fluctuating since, usually, the batteries of an electrified vehicle are placed above the floor or on the roof of the vehicle to maximise the usable space inside the vehicle, especially in the case of a vehicle for public passenger transport. In this position, the influence of the sun or of the outside temperature tends to change the temperature of the electric batteries even more.

This temperature change affects the service life of electric batteries; in fact, it is known that a temperature of 25° is recommended, which does not drastically reduce the service life of electric batteries.

For this purpose, it is known to equip the vehicle with a conditioning system for electrical equipment, such as lithium batteries, to keep them within a desired temperature range.

A known conditioning system comprises a fluid heat exchanger configured to enable a fluid, for example water, to flow around a box containing the electrical equipment. The conditioning system also comprises ventilation means configured to direct a flow of air over a radiator in which fluid passes exchanging heat with air sent by the ventilation means.

When it is necessary to cool the electrical equipment, it is sufficient to activate the ventilation means that send a flow of air towards the exchanger in which the heated fluid passes after passing in / around the electrical equipment. The air flow cools the fluid, which returns to / near the electrical equipment to absorb heat again.

In contrast, when it is necessary to heat in / around the electrical equipment, the air entering the exchanger is heated by means of electrical resistors. In this way, the fluid, passing in / around the electrical equipment will provide them with the heat acquired by passing through the exchanger. However, these resistors consume a lot of energy and, in addition, by heating the air, the efficiency of the conditioning system is reduced, which consequently increases the vehicles' consumption.

There is, therefore, a need to provide conditioning systems for electrical equipment in vehicles that reduce their consumption.

The invention aims to solve the drawbacks mentioned above in an economical and improved way.

### SUMMARY OF THE INVENTION

The aims mentioned above are achieved via the conditioning system and a vehicle according to the attached claims.

### BRIEF DESCRIPTION OF THE DRAWINGS

Additional characteristics and advantages of the invention will clearly emerge from the description that follows, by way of a non-limiting example only, with reference to the attached drawings, wherein:
- Figure 1 is a schematic side view of a vehicle for public passenger transport comprising electrical equipment;
- Figure 2A is a schematic view from above of a conditioning system according to the invention in a first operating condition; and
- Figure 2B is a schematic view from above of a conditioning system according to the invention in a second operating condition.

### DETAILED DESCRIPTION OF THE INVENTION

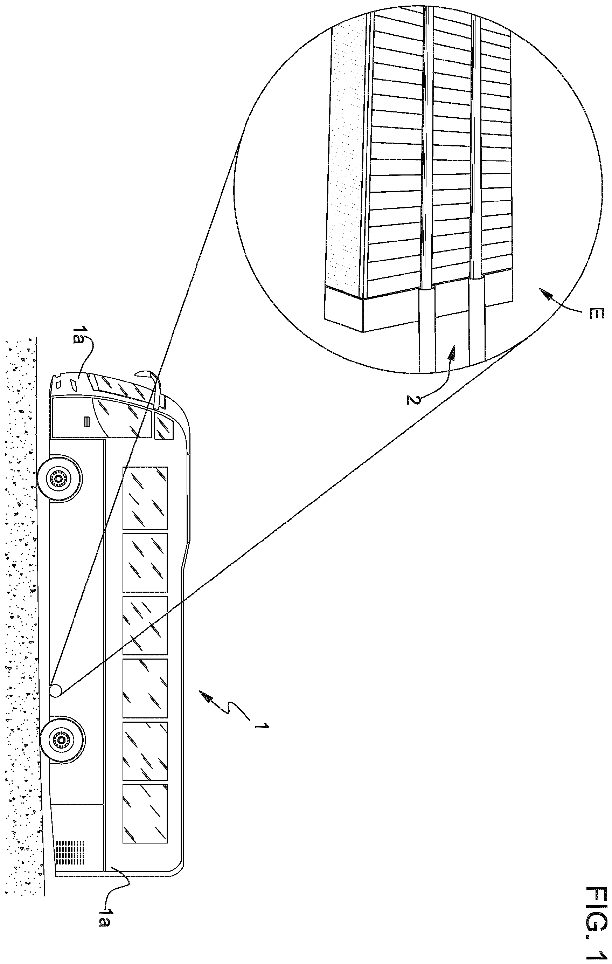

Figure 1 schematically illustrates a public transport vehicle 1 comprising multiple walls 1a that define an interior space for accommodating passengers. In the case described herein, the vehicle comprises electrical equipment E housed above the floor of the vehicle 1 and a fluid conditioning system 2 configured to enable the circulation of a conditioning fluid around a box containing the electrical equipment E.

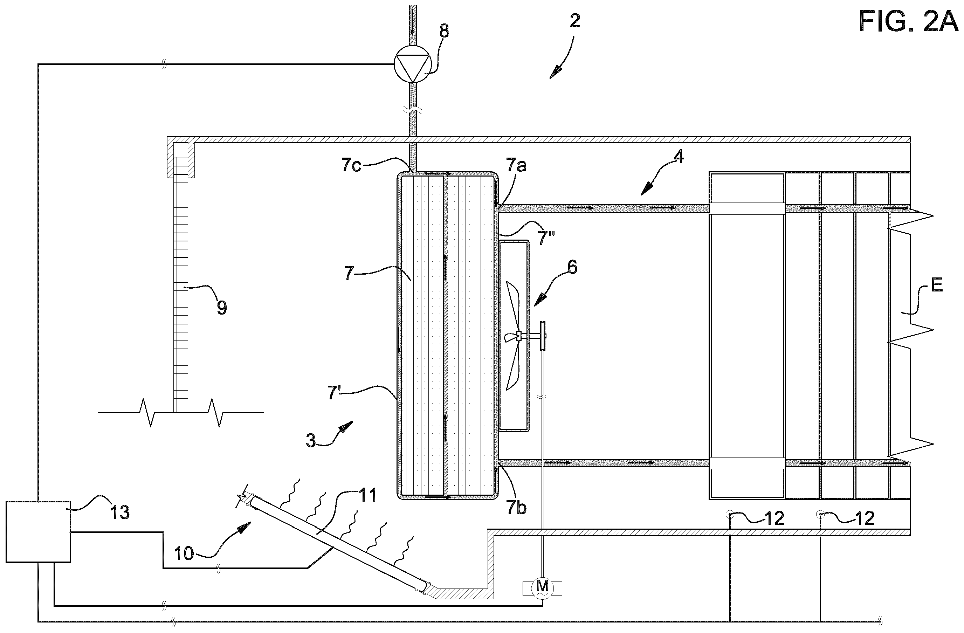

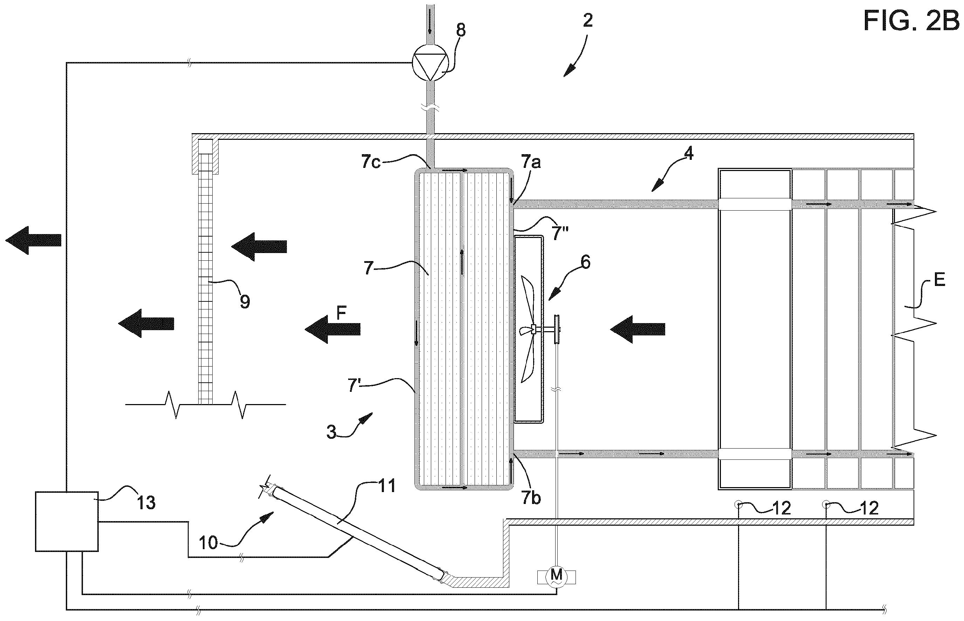

In particular, as illustrated in Figures 2 and 3, the conditioning system 2 basically comprises a heat exchanger 3 configured to promote heat exchange of a conditioning fluid flowing in a circuit 4 that passes in contact with the box containing the electrical equipment E.

In addition, the conditioning system 2 comprises ventilation means 6 configured to selectively generate and direct an air flow F to the heat exchanger 3 to improve the latter's heat exchange with the environment, when necessary.

In particular, the heat exchanger 3 essentially comprises a heat exchanger, for example a radiator 7 with a basically prismatic shape and equipped with a first opening 7a and a second opening 7b configured to connect the radiator 7 to the conditioning circuit 4.

In accordance with the prismatic shape described above, the radiator 7 comprises a front wall 7', a back wall 7", a pair of side walls, an upper wall, and a lower wall.

The front and back walls 7', 7" are equipped with openings configured to enable the passage of the air flow F generated by the ventilation means 6 through the radiator 7 to increase the heat exchange of the conditioning fluid with the environment inside the radiator 7.

In particular, the back wall 7" is located opposite the ventilation means 6, while the front wall 7' is opposite this. In the illustrative case described herein, the ventilation means 6 are located between the radiator 7 and the electrical equipment E so as to push the air away from the electrical equipment E, i.e. towards the outside of the vehicle.

Advantageously, the vehicle thus comprises a ventilation sleeve 9 configured to allow the air flow generated by the ventilation means 6 to flow outside of the vehicle. As illustrated, the ventilation sleeve 9 may be made through one of the walls 1a by means of openings.

The conditioning system 2 also comprises compression means 8, for example a pump, configured to enable the operating fluid to circulate within the circuit 4 and the exchanger 3. In the illustrative case described herein, a pump is fluidically connected to an additional opening 7c of the radiator 7 and is configured to draw fluid through the radiator 7, from the fluid circuit 4, after passing in / around the box of the electrical equipment E, to inject it back into the radiator 7.

According to the invention, the conditioning system 2 comprises heating means 10 for directly heating at least one wall of the radiator 7.

In particular, these heating means 10 are electromagnetic heating means, i.e. radiation heating means.

Advantageously, the heating means 10 comprise emitters of electromagnetic radiation 11, preferably infrared radiation, i.e. having a wavelength ranging between 700 nm and 1 mm.

In particular, the emitters 11 are arranged around the radiator 7 so as to emit electromagnetic radiation that heats a wall of the radiator 7 but without interfering with the flow F generated by the ventilation means 6 on the radiator 7. That is, the emitters 11 are located outside the space occupied by the flow F.

Optionally (not illustrated), the conditioning system 2 could comprise a first emitter 11 dedicated to the emission towards the front wall 7b of the radiator 7 and a second emitter 11 dedicated to the emission towards the front wall 7a of the radiator 7 and, as mentioned above, located externally with respect to the flow F generated by the ventilation means 6.

The conditioning system 2 also comprises sensor means 12 configured to detect the temperature of the electrical equipment E. In particular, the conditioning system 2 may comprise a thermometer installed inside and / or outside the box containing the electrical equipment E.

Advantageously, the conditioning system 2 also comprises an electronic unit 13 electrically connected, with a wired or wireless connection, to the sensors 12, to the compression means 8, and to the emitters 11, and configured to process the signal of the sensors 12 and command the compression means 8 and the emitters 11 accordingly. In particular, the electronic unit 13 may be the ECU of the vehicle 1.

Preferably, the electronic unit 13 comprises processing means configured to process the values detected by the sensor means 12 and, accordingly, automatically command the compression means 8 and the emitters 11 according to the procedure below.

The operation of the conditioning system 2 according to the invention is the following.

In a first operating condition, when it is necessary to cool the electrical equipment E, it is sufficient to activate the ventilation means 6 that send an air flow towards the exchanger 7 in which the fluid heated after passing in / around the electrical equipment E passes. The air flow cools the fluid that returns to / near the electrical equipment E to absorb its heat.

In a second operating condition, when heating is required in / near the vicinity of the electrical equipment E, the heating means 10 are activated to heat the heat exchanger 7. The latter, in the example described with the emitters 11, generate electromagnetic radiation - infra-red in the case described - that superficially interacts with the metallic material of the radiator 7 that heats up accordingly.

It should be noted that electromagnetic radiation does not interfere with the air and therefore does not reduce the efficiency of the heat exchange. In fact, they only interact with the surface of the walls 7', 7', heating them. From the above, the advantages of a conditioning system 2 according to this invention are evident.

Thanks to the heating means 10, it is possible to directly heat the walls of a heat exchanger 3, i.e. its external surfaces, without heating the air between the ventilation means 6 and the radiator itself. In this way, alteration in the efficiency of the heat exchange of the conditioning fluid in the heat exchanger is prevented, maximising the transmission of heat.

In addition, the heating means 10 do not lose energy to heat this air, avoiding increases in vehicle consumption.

In addition, these heating means 10 are not physically placed in the flow F between the ventilation means 6 and the radiator 7, preventing a decrease of the heat exchange between the air and the radiator 7.

In addition, the use of infrared emitters 11 enables the advantages mentioned above to be obtained economically.

Finally, it is clear that the conditioning system 2 according to this invention can be subject to modifications and variations that do not, however, deviate from the scope of the protection defined by the claims.

For example, one or more heating means 10 may be present and, as mentioned, dedicated to different walls of the heat exchanger 3.

Again, the arrangement of the conditioning system 2 may be different, as may the presence of the detection means 12, and, consequently, of the electronic unit 13.

In addition, the radiation emitted by the emitters 11 may have a different wavelength.

## Claims

1. A conditioning system (2) for electrical equipment (E) of a vehicle (1), said conditioning system (2) comprising a heat exchanger (3) inside of which a conditioning fluid of a conditioning circuit (4), configured to exchange heat with said electrical equipment (E), circulates, said conditioning circuit (4) comprising heating means (10) configured to directly heat at least one of the walls (7', 7") of said heat exchanger (3).

2. The conditioning system according to claim 1, wherein said heating means (10) are electromagnetic heating means.

3. The conditioning system according to claim 1 or 2, wherein said heating means (10) comprise an electromagnetic radiation emitter (11).

4. The conditioning system according to claim 3, wherein said electromagnetic radiation has a wavelength of less than 1 mm.

5. The conditioning system according to claim 3 or 4, wherein said electromagnetic radiation has a wavelength comprised between 700 nm and 1 mm.

6. The system according to one of the preceding claims, comprising ventilation means (6) configured to generate a flow (F) of air directed towards at least one of the walls (7', 7") of said heat exchanger, said heating means (10) being positioned so as not to interfere with said flow (F) of air.

7. The system according to one of the preceding claims, comprising compression means (8) fluidically connected to said heat exchanger (3) and configured to allow the circulation of said conditioning fluid in said conditioning circuit (4).

8. The system according to one of the preceding claims, comprising sensor means (12) configured to detect the temperature of said electrical equipment (E) and an electronic unit (13) electrically connected to said sensor means (12) and to said heating means (10) and configured to control the latter as a function of the signal detected by said sensor means (12).

9. The system according to claim 8 and claim 7, wherein said electronic unit (13) is electrically connected to said compression means (8) and is configured to control the latter as a function of the signal detected by said sensor means (12).

10. A vehicle for the transport of public passengers comprising a conditioning system (2) according to claims 1 to 9.
